# EUROPEAN PATENT APPLICATION

(11) **EP 1 575 018 A1**
(43) Date of publication of application: **14.09.2005**
(21) Application number: 02808296.4
(22) Date of filing: 20.12.2002
(51) Int. Cl.: G09F 19/00

(54) **ADVERTISEMENT DELIVERY SYSTEM AND METHOD**

(71) Applicant: FUJITSU LIMITED, Kanagawa 211-8588 (JP)
(72) Inventor: KAMIWADA, Toru, FUJITSU LIMITED, Kawasaki-shi, Kanagawa 211-8588 (JP); FUJITA, Takushi, FUJITSU LIMITED, Kawasaki-shi, Kanagawa 211-8588 (JP); MIYAZAKI, Toshiya, FUJITSU LIMITED, Kawasaki-shi, Kanagawa 211-8588 (JP); IDANI, Shigehiro, FUJITSU LIMITED, Kawasaki-shi, Kanagawa 211-8588 (JP)
(74) Representative: Stebbing, Timothy Charles
(86) International application number: PCT/JP2002/013338
(87) International publication number: WO 2004/057558

(57) **Abstract**

An advertisement distribution system is provided, by which advertisements with contents that a user demands can be distributed while assuring security concerning user information. According to the advertisement distribution system, in a network environment including an Internet connection device that establishes relay and connection between a LAN environment and an Internet environment, the Internet connection device allows to receive and store information concerning a user of a user device connected over the LAN environment; to compare received attribute information of advertisement contents data with the stored user information so as to sort out the advertisement contents data; to receive and store the advertisement contents data that are to be distributed from a distribution device used by an advertisement contents distributor; and to distribute the advertisement contents data in response to a request. Only when there is coincidence between the attribute information of the advertisement contents data and the user information, the advertisement contents data as a whole are received from the distribution device used by the advertisement contents distributor.

## Description

### TECHNICAL FIELD

The present invention relates to an advertisement distribution system provided with a network connection device such as a router for connecting an internal LAN environment and an external Internet environment, which is capable of: collecting contents available via a network unconditionally; selecting the contents based on personal information concerning users registered beforehand; and then redelivering the selected contents to devices connected with the internal LAN environment. The present invention also relates to a method for distributing advertisements.

### BACKGROUND ART

Due to the rapid spread of the Internet in recent years, various advertisement distribution systems utilizing a network such as the Internet have been developed. Above all, banner advertisements embedded in HTML documents that are displayed over World Wide Web (WWW) are typical examples.

In the banner advertisements, image contents and animation contents, which are produced as advertisement contents, are pasted as embedded objects in a HTML document. When the HTML document is accessed by means of a WWW browser or the like for displaying it on a screen, the advertisement contents pasted thereon also will be displayed at the same time.

In the banner advertisements, however, all users who access the HTML document with the banner advertisements embedded therein are targeted for distributing the advertisements. Therefore, the advertisement provider of the advertisements does not have information for judging as to whether such banner advertisements attract users receiving the advertisements or are useful for the users or not. For that reason, such advertisements may not be demanded by the users at all or just the presence of such advertisements may annoy some users. Such advertisements do not bring any merits on the users, and moreover may degrade the impression on the advertisement provider of the advertisements.

In order to avoid such a situation, a method of publishing advertisements relating to the contents of a HTML document for embedding the banner is used often. For instance, in a WWW site that carries an article concerning computers, advertisements of computer related products are published, and in a WWW site that carries an article concerning music, advertisements of products such as AV equipment are published.

Meanwhile, in some WWW sites adopting a members-only system that requires user registration, user information such as interesting fields also is registered at the time of the user registration. For example, as disclosed in JP 2002-150114 A, user information is registered beforehand, and when the registered user makes an access, the advertisements complying with the user's interesting fields only can be distributed to the user. More detailed information on a registered user makes it easier to distribute the advertisements having contents complying with the user's interests.

However, according to the above-described method of distributing the advertisements closely relating to the contents of the HTML document, it is still difficult to specify the preferences of users as a target, and there is a strong possibility that advertisements that will not be welcomed by the users may be distributed. In particular, in the case where the HTML document is targeted to a wide spectrum of users, the disagreement between the user's demands and the contents of the advertisements provided will be likely to occur.

### DISCLOSURE OF THE INVENTION

As another possible method, a tendency of users who would access the data in which advertisements such as HTML documents are provided may be estimated arbitrarily to some extent, and types of the advertisements to be provided may be specified in advance. In this case, however, there remains a problem that advertisement providers whose advertisements do not agree with the specified types are not allowed to have a site for distributing their advertisements.

Furthermore, as in the members-only service, in which user information such as ages, sexes, residence areas and interesting fields is collected before providing the advertisements selected for each user, users often refuse the provision of their user information from the viewpoint of privacy protection. In particular, if detailed user information is used for a secondary purpose, users may suffer from disadvantages. As a result, in the case where user information is to be collected before providing advertisement contents, it is difficult to acquire the users who take their privacy seriously and may be reluctant to let the advertisement provider know their personal information, and therefore there is a problem of the difficulty in increasing the users for providing the advertisements.

In order to cope with the above-stated problems, it is an object of the present invention to provide an advertisement distribution system capable of distributing advertisements with the contents that a user demands, while assuring security concerning user information.

In order to fulfill the above-stated object, the advertisement distribution system according to the present invention includes an Internet connection device that establishes relay and connection between a LAN environment and an Internet environment. The Internet connection device includes: a user information reception part that receives user information concerning a user of a user device connected over the LAN environment; a user information storing part that analyzes the user information and stores an analysis result; an advertisement contents data attribution information reception part that receives attribute information of advertisement contents data; an advertisement contents data selection processing part that compares the attribute information of the advertisement contents data with the analysis result so as to sort out the advertisement contents data; an advertisement contents data reception part that receives the advertisement contents data that are to be distributed from a distribution device used by an advertisement contents distributor, the distribution device being connected over the Internet environment; an advertisement contents data storing part that stores the received advertisement contents data; and an advertisement contents data distribution part that distributes the advertisement contents data in response to a request from the user device connected over the LAN environment. Only when there is coincidence between the attribute information of the advertisement contents data and the analysis result, the advertisement contents data having the attribute information as a whole are received from the distribution device used by the advertisement contents distributor, and when there is no coincidence therebetween, the advertisement contents data are not received.

With the above-stated configuration, the advertisement contents matching with the user's hobbies and preferences only can be downloaded in accordance with the attribute information of the advertisement contents, which can prevent the advertisement contents that would not interest the user from being distributed, and there is no need to provide the user's privacy information and the like to advertisement distributors.

It is preferable that the advertisement distribution system according to the present invention further includes a display contents reception part that receives display information concerning display of the advertisement contents data on the user device connected over the LAN environment. The selection and the prioritization of the advertisement contents data and the displaying method for each user such as layout can be made more suitable for the viewing tendency of the user.

It is preferable that the advertisement distribution system according to the present invention further includes a correlation coefficient calculation part that performs aggregation so as to determine correlation among the attributed information of the displayed advertisement contents data, a display frequency and a timing based on the display information received by the display contents reception part. The contents data distribution part preferably distributes the advertisement contents data in accordance with the calculated correlation coefficient. This configuration can make the distribution more suitable for the user's viewing tendency by a more statistical method.

Preferably, in the advertisement distribution system according to the present invention, prioritization of the order of distributing the advertisement contents data is performed in accordance with attribute information concerning the advertisement contents data that are actually displayed.

The present invention also is directed to software for executing the functions of the above-stated advertisement distribution system as the processing steps of a computer. More specifically, a program embodies an advertisement distribution method including the following steps and such a procedure in a network environment including an Internet connection device that establishes relay and connection between a LAN environment and an Internet environment. The program makes a computer in the Internet connection device execute the steps of: receiving user information concerning a user of a user device connected over the LAN environment; analyzing the user information and storing an analysis result; receiving attribute information of advertisement contents data; comparing the attribute information of the advertisement contents data with the analysis result so as to select the advertisement contents data; receiving the advertisement contents data that are to be distributed from a distribution device used by an advertisement contents distributor, the distribution device being connected over the Internet environment; storing the received advertisement contents data; and distributing the stored advertisement contents data in response to a request from the user device connected over the LAN environment. Only when there is coincidence between the attribute information of the advertisement contents data and the analysis result, the advertisement contents data having the attribute information as a whole are received from the distribution device used by the advertisement contents distributor, and when there is no coincidence therebetween, the advertisement contents data are not received.

With this configuration, when the program is loaded onto the computer and is executed, the advertisement distribution system can be realized such that the advertisement contents matching with the user's hobbies and preferences only can be downloaded in accordance with the attribute information of the advertisement contents, which can prevent the advertisement contents that would not interest the user from being distributed, and there is no need to provide the user's privacy information and the like to advertisement distributors.

### BRIEF DESCRIPTION OF DRAWINGS

Fig. 1 shows the configuration of an advertisement distribution system according to one embodiment of the present invention.
Fig. 2 shows the configuration of a home server in the advertisement distribution system according to one embodiment of the present invention.
Fig. 3 shows an exemplary data configuration stored in a user information storing part in the advertisement distribution system according to one embodiment of the present invention.
Fig. 4 shows an exemplary data configuration of attribute information of advertisement contents acquired by an advertisement contents data attribute information acquisition part in the advertisement distribution system according to one embodiment of the present invention.
Fig. 5 is a flowchart showing the procedure of a program in the home server in the advertisement distribution system according to one embodiment of the present invention.
Fig. 6 shows exemplary setting items of feedback information in the advertisement distribution system according to one embodiment of the present invention.
Fig. 7 shows an exemplary computer environment.

### BEST MODE FOR CARRYING OUT THE INVENTION

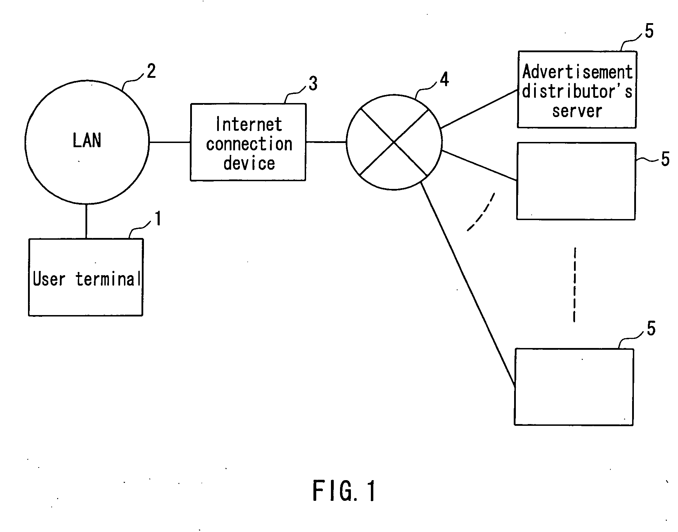

The following describes an advertisement distribution system according to embodiments of the present invention, with reference to the drawings. Fig. 1 shows the configuration of the advertisement distribution system according to one embodiment of the present invention.

In Fig. 1, reference numeral 1 denotes a user terminal that a user uses, which is connected with a LAN environment 2 in the office, at home or the like. As the user terminal 1, various equipment such as a personal computer, a personal digital assistant (PDA) or a set-top box is available. Then, the LAN environment 2 is connected with an external Internet environment 4 by way of an Internet connection device 3 only.

That is, due to the rapid spread of the Internet use into ordinary households, communication infrastructures such as asymmetric digital subscriber line (ADSL) and fiber to the home (FTTH), which can realize "Always-on" connection and broadband connection, have been also developed rapidly. In addition, as the cost of personal computers has been reduced, the usage form such that a plurality of personal computers are concurrently connected with the Internet also is currently becoming popular at ordinary households. In order to realize such a usage form, the Internet connection device 3, called generally a broadband router, is required in the LAN environment 2 at each home.

At the time of the setup of the Internet connection device 3, a user registers information concerning his/her preferences, hobbies and the like beforehand in the Internet connection device 3 by means of the user terminal 1. Then, the Internet connection device 3 collects at regular time intervals advertisement contents data that are provided by a plurality of advertisement distributor's servers 5 connected with the Internet environment 4, and compares the collected advertisement contents data with the registered user information, whereby the advertisements having the contents suitable for the user can be selected and accumulated.

When the user browses the advertisement contents existing over the Internet, the connection is not established directly with the Internet environment 4, but with the Internet connection device 3 located within the LAN environment 2 so that the accumulated advertisement contents data are displayed on the user terminal 1.

For instance, in the case where a home server 30 is used as the Internet connection device 3, the connection is established with the Internet environment 4 by way of the home server 30 connected with the LAN environment 2 at home.

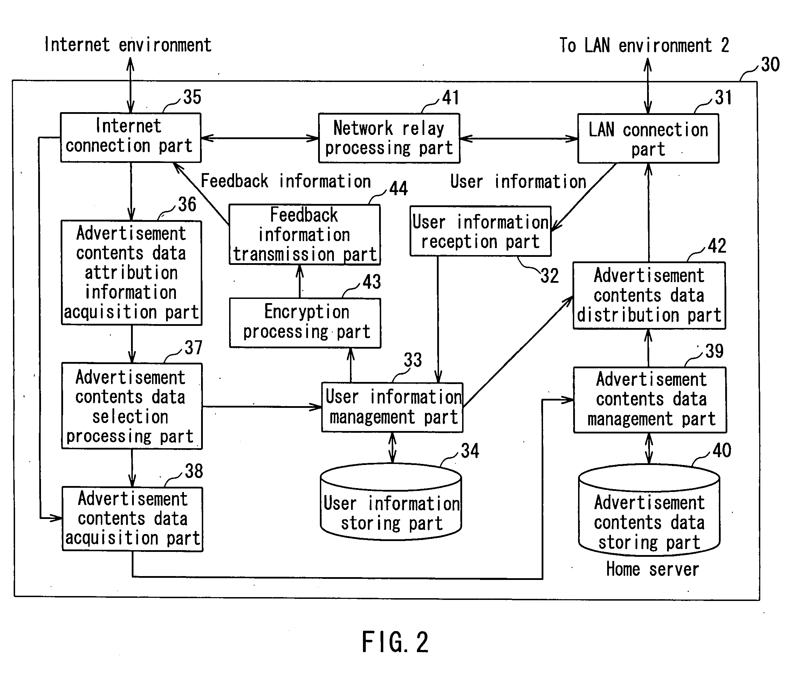

Fig. 2 shows the configuration of the home server 30 in the advertisement distribution system according to one embodiment of the present invention. In Fig. 2, the user establishes connection with the LAN environment 2 by means of the user terminal 1. For the connection with the Internet environment 4, the connection is established by means of an Internet connection part 35 by way of a network relay processing part 41.

When using as the advertisement distribution system, the user transmits user information from the user terminal 1 through a LAN connection part 31 in the home server 30. The user information mainly contains attribute information including items such as ages, areas, sexes and interesting fields, which are used for filtering the advertisement contents data obtained from the Internet environment 4 so as to render them suitable for each user.

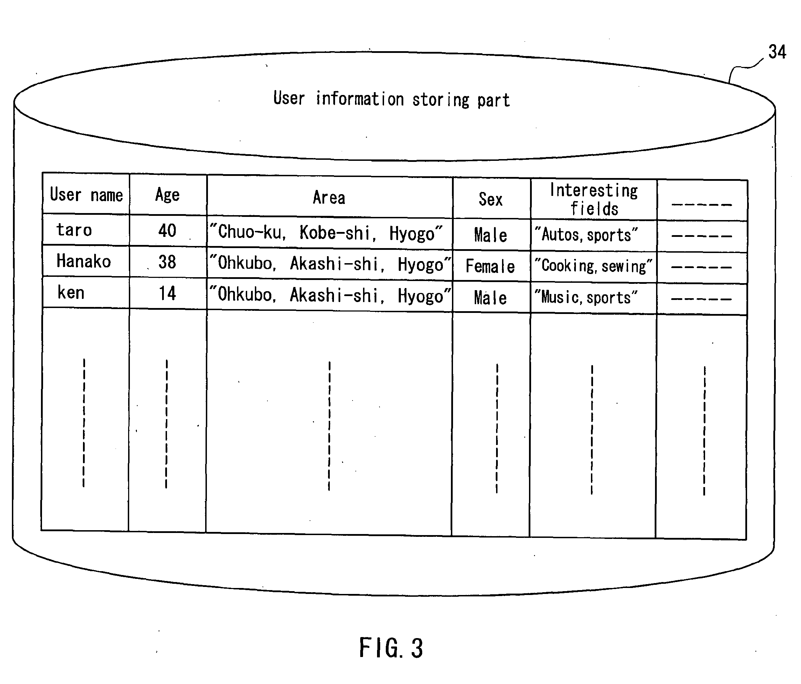

In the home server 30, a user information reception part 32 receives the transmitted user information, a user information management part 33 analyzes the contents and a user information storing part 34 stores it. Fig. 3 shows an exemplary data configuration stored in the user information storing part 34 in the advertisement distribution system according to one embodiment of the present invention.

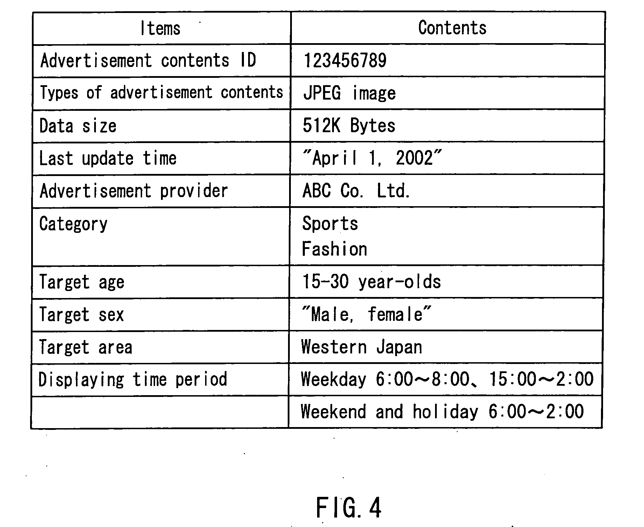

Meanwhile, as for advertisement contents data provided by the advertisement distributor's servers 5 connected with the Internet environment 4, an advertisement contents data attribution information acquisition part 36 acquires at regular time intervals or at a predetermined timing attribute information of the advertisement contents data distributed from the advertisement distributor's servers 5. The attribute information of the advertisement contents data, as shown in Fig. 4, contains information as digital data, including the ID of the advertisement contents, the type of the advertisement contents, the data size of the advertisement contents, the last update time of the advertisement contents and the like, as well as information indicating a distribution target of the advertisements such as the target age, the target area, the displaying time period and categories.

Next, the attribute information of the advertisement contents data acquired by the advertisement contents data attribute information acquisition part 36 in the home server 30 is transmitted to an advertisement contents data selection processing part 37. The advertisement contents data selection processing part 37 compares the transmitted attribute information of the advertisement contents data with the user information stored in the user information storing part 34, and instructs an advertisement contents data acquisition part 38 to acquire from the advertisement distributor's server 5 the advertisement contents data as a whole that has the attribute information matching with any of the user information.

Then, upon receipt of the instruction, the advertisement contents data acquisition part 38 acquires the corresponding advertisement contents data from the advertisement distributor's server 5 and transmits the same to an advertisement contents data management part 39, whereby the acquired advertisement contents data can be stored along with the attribute information in an advertisement contents data storing part 40.

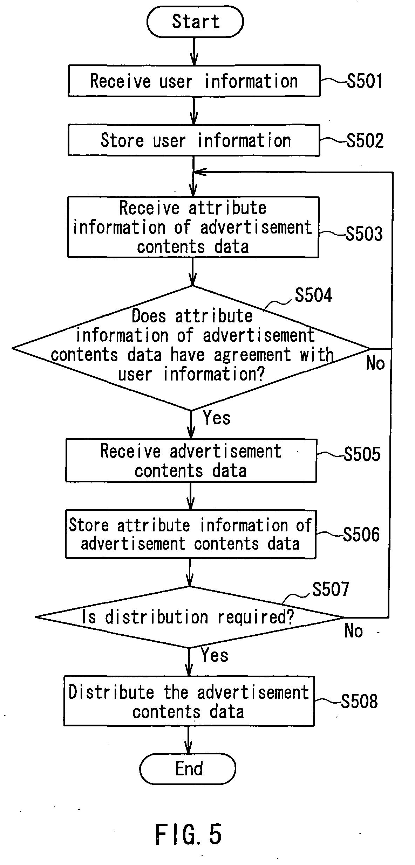

Fig. 5 is a flowchart showing the procedure of a program in the home server 30 in the advertisement distribution system according to one embodiment of the present invention. In Fig. 5, user information transmitted from the user terminal 1 is received (Step S501) and the contents of the received user information are analyzed and stored (Step S502).

Meanwhile, attribute information of the advertisement contents data provided from the advertisement distributor's servers 5 is received at regular time intervals or at a predetermined timing (Step S503) and the received attribute information of the advertisement contents data and the stored user information are compared and confirmation is conducted as to whether there is coincidence, even only one point of coincidence, therebetween (Step S504).

If there is coincidence between the attribute information of the advertisement contents data and the stored user information (Step S504: Yes), the advertisement contents data as a whole that has that attribute information are received from the advertisement distributor's server 5 (Step S505), and the received advertisement contents data are stored along with the attribute information (Step S506).

If there is no coincidence between the attribute information of the advertisement contents data and the stored user information (Step S504: No), it is judged that the advertisement contents data should not be distributed to the user, and the advertisement contents data are not received but the attribute information of another advertisement contents data is received continuously (Step S503).

Then, when a distribution requirement of advertisement contents data is received from the user terminal 1 (Step S507: Yes), then the stored advertisement contents data are distributed to the user terminal 1 issuing the request (Step S508).

Note here that, in the present embodiment, the data are distributed unconditionally if at least one coincidence exists. However, this is not a limited example, and the degree of the coincidence may be determined, for example, and the advertisement contents with a higher degree of coincidence may be distributed by giving priority.

With the above-described procedure, only the advertisement contents data suitable for each user are accumulated in the home server 30, so that when a request for advertisement contents distribution is issued from a user terminal 1, the advertisement contents matching with the user's hobbies and preferences only can be distributed by distributing the stored advertisement contents data.

That is, when the home server 30 receives a request for distributing advertisement contents data from a user terminal 1, the home server 30 lets an advertisement contents data distribution part 42 fetch the advertisement contents data, which are selected by comparing the attribute information of the advertisement contents data with the user information corresponding to the distribution request and stored, from the advertisement contents data storing part 40 through the advertisement contents data management part 33, and the fetched data is then distributed to the user terminal 1 by way of the LAN connection part 31.

When the advertisement contents data distributed from the home server 30 are displayed on the user terminal 1, information such as the starting time of the display and the name of the user may be fed back to the home server 30, for example. Moreover, in the case where the display of the advertisement contents data is finished in the user terminal 1 by switching to another advertisement contents data or switching to another procedure, information concerning the finishing method may be added to the contents notified at the time of the starting of the display. The information concerning the finishing method, for example, may contain conditions such that all the advertisement contents data have been displayed and the display has been skipped.

Then, the home server 30 is provided with a display information reception part (not illustrated), which receives as display information the feedback information such as the starting time of the display on the user terminal 1 so as to record the information, indicating that the advertisement contents data have been displayed, in the stored advertisement contents data, change the precedence of the interesting fields of the user information or statistically process the viewing time period of the user in accordance with the contents of the received display information.

In this way, the attribute information of the advertisement contents data and the user information, which are updated based on the feedback information, are utilized for determining the advertisement contents data to be distributed in the future, whereby the selection and the prioritization of the advertisement contents data and the displaying method for each user such as layout can be made more suitable for the viewing tendency of the user.

Furthermore, the home server 30 is allowed to know the information concerning, for example, when and how long the respective advertisement contents data are displayed, thus realizing the distribution of the advertisement contents data so that the viewing tendency of the user can be reflected more.

Furthermore, the feedback information collected by the home server 30 can be utilized as the data indicating the viewing history of the respective advertisement contents data, and therefore this is effective information concerning the advertisements for advertisement distributors and producers of advertisement contents. However, since such information contains the privacy of the individual users, this should not be on public view unconditionally.

To this end, the information as to whether the feed back information can be on public view or not may be set beforehand in the home server 30, whereby the degree to permit the public view can be stored as the user information.

Furthermore, the information showing how often the respective advertisements accumulated in the Internet connection device are accessed may be prepared by calculation, which may be stored in the home server 30 as the information indicating what types of advertisements each user browses.

To store such information allows the browsing pattern of the user to be known, by which it can be known as to what types of advertisements the user often browses. Thus, when selecting the advertisement contents data to be distributed to the user, the advertisement contents data more suitable for each user can be provided.

Furthermore, the data concerning the browsing pattern may be transmitted as the feedback information to advertisement distributor's servers 5 through the Internet environment 4. The advertisement distributors are allowed to know the browsing pattern of the user, and such information can be used effectively for reviewing the contents, the providing means, the cost and the like of the advertisement contents.

It should be noted that whether the information concerning the user's browsing pattern may be transmitted to advertisement distributors or not and when transmitting, what items are to be transmitted, etc., are matters concerning the user's privacy, and therefore preferably these are items the user is allowed to set in the home server 30.

With the above-described configuration, the processing involving the personal information of the user can be realized by the home server installed at home, and there is no need to provide the information concerning the privacy of each user to advertisement distributors over the Internet outside the home, which can prevent the malicious use of the user's personal information.

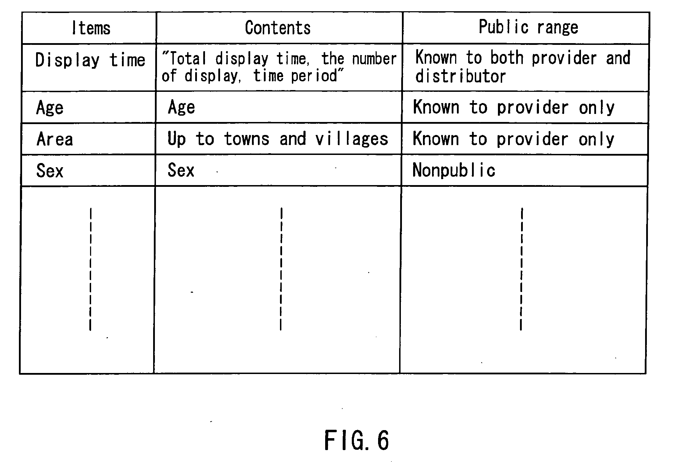

Fig. 6 shows exemplary setting items of the feedback information in the advertisement distribution system according to one embodiment of the present invention. As shown in Fig. 6, each user is allowed to set the public range by himself/herself so as to enable the limitation of the contents that are transmitted as the feedback information.

Furthermore, when transmitting the feedback information, the contents preferably are encrypted so as to prevent eavesdroppers, and a digital signature preferably is put thereon so as to prevent tampering. For instance, when the feedback information is transmitted, a shared secret key should be generated by a key exchanging processing between the home server 30 and a distributor server 5 as the destination. When the feedback information is transmitted later, the feedback information is encrypted using the shared secret key by an encryption processing part 43, which is then transmitted from a feedback information transmission part 44 to the advertisement distributor's server 5.

As to the digital signature, a pair of a public key and a secret key for an asymmetric key cryptosystem is generated beforehand in the home server 30, and the public key of them is registered to the advertisement distributor's server 5. Needless to say, when an independent organization such as a public key infrastructure (PKI) is available, the key may be registered thereto. Thereafter, when the feedback information is transmitted, the digital signature is written using the secret key, and encryption is conducted using the above-stated shared secret key.

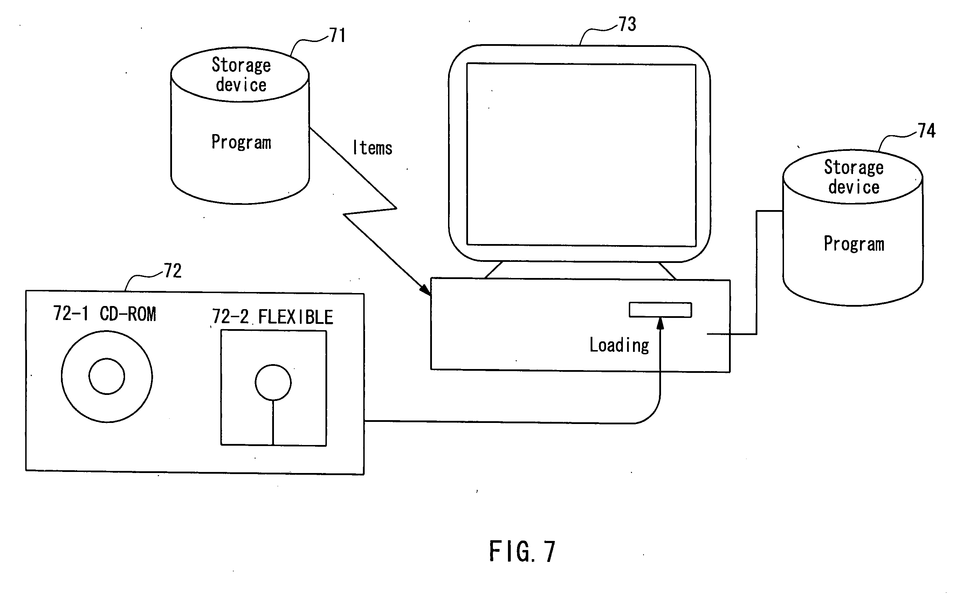

Note here that a program used in the home server for embodying the advertisement distribution system according to one embodiment of the present invention may be stored, as shown in Fig. 7, not only on a portable recording medium 72 such as a CD-ROM 72-1, a flexible disk 72-2 or the like but also on other storage devices 71 equipped at the forward of a telecommunication line and a recording medium 74 such as a hard disk and a RAM of a computer 73. When the program is executed, the program is loaded and is executed on a main memory.

Furthermore, the user information and the like, which are generated by the advertisement distribution system according to one embodiment of the present invention, also may be stored, as shown in Fig. 7, not only on the portable recording medium 72 such as the CD-ROM 72-1, the flexible disk 72-2 or the like but also on other storage devices 71 equipped at the forward of a telecommunication line and the recording medium 74 such as the hard disk and the RAM of the computer 73. For instance, when the advertisement distribution system according to the present invention is used, this information is read out by the computer 73.

### INDUSTRIAL APPLICABILITY

As stated above, according to the advertisement distribution system of the present invention, the advertisement contents matching with the user's hobbies and preferences only can be downloaded in accordance with the attribute information of the advertisement contents, which can prevent the advertisement contents that would not interest the user from being distributed, and there is no need to provide the user's privacy information and the like to advertisement distributors.

Furthermore, the public range of the information concerning the privacy can be varied in accordance with the setting by the user, and encryption and digital signatures are used concurrently, whereby feedback information can be provided with safety to a distributor and a provider of advertisement contents.

## Claims

1. An advertisement distribution system, comprising an Internet connection device that establishes relay and connection between a LAN environment and an Internet environment,
wherein the Internet connection device comprises:
a user information reception part that receives user information concerning a user of a user device connected over the LAN environment;
a user information storing part that analyzes the user information and stores an analysis result;
an advertisement contents data attribution information reception part that receives attribute information of advertisement contents data;
an advertisement contents data selection processing part that compares the attribute information of the advertisement contents data with the analysis result so as to sort out the advertisement contents data;
an advertisement contents data reception part that receives the advertisement contents data that are to be distributed from a distribution device used by an advertisement contents distributor, the distribution device being connected over the Internet environment;
an advertisement contents data storing part that stores the received advertisement contents data; and
an advertisement contents data distribution part that distributes the advertisement contents data in response to a request from the user device connected over the LAN environment,
wherein only when there is coincidence between the attribute information of the advertisement contents data and the analysis result, the advertisement contents data having the attribute information as a whole are received from the distribution device used by the advertisement contents distributor, and when there is no coincidence therebetween, the advertisement contents data are not received.

2. The advertisement distribution system according to claim 1, further comprising a display contents reception part that receives display information concerning display of the advertisement contents data on the user device connected over the LAN environment.

3. The advertisement distribution system according to claim 2, further comprising a correlation coefficient calculation part that performs aggregation so as to determine correlation among the attributed information of the displayed advertisement contents data, a display frequency and a timing based on the display information received by the display contents reception part,
wherein the contents data distribution part distributes the advertisement contents data in accordance with the calculated correlation coefficient.

4. The advertisement distribution system according to claim 1, wherein prioritization of the order of distributing the advertisement contents data is performed in accordance with attribute information concerning the advertisement contents data that are actually displayed.

5. An advertisement distribution method, in which, in a network environment comprising an Internet connection device that establishes relay and connection between a LAN environment and an Internet environment, the Internet connection device performs the steps of:
receiving user information concerning a user of a user device connected over the LAN environment;
analyzing the user information and storing an analysis result;
receiving attribute information of advertisement contents data;
comparing the attribute information of the advertisement contents data with the analysis result so as to sort out the advertisement contents data;
receiving the advertisement contents data that are to be distributed from a distribution device used by an advertisement contents distributor,
the distribution device being connected over the Internet environment;
storing the received advertisement contents data; and
distributing the stored advertisement contents data in response to a request from the user device connected over the LAN environment,
wherein only when there is coincidence between the attribute information of the advertisement contents data and the analysis result, the advertisement contents data having the attribute information as a whole are received from the distribution device used by the advertisement contents distributor, and when there is no coincidence therebetween, the advertisement contents data are not received.

6. A program that embodies an advertisement distribution system in a network environment comprising an Internet connection device that establishes relay and connection between a LAN environment and an Internet environment, the program making a computer in the Internet connection device execute the steps of:
receiving user information concerning a user of a user device connected over the LAN environment;
analyzing the user information and storing an analysis result;
receiving attribute information of advertisement contents data;
comparing the attribute information of the advertisement contents data with the analysis result so as to confirm whether there is at least one coincidence therebetween;
receiving advertisement contents data that are to be distributed from a distribution device used by an advertisement contents distributor, the distribution device being connected over the Internet environment;
selecting the advertisement contents data in accordance with the user information;
storing the selected advertisement contents data; and
distributing the stored advertisement contents data in response to a request from the user device connected over the LAN environment,
wherein only when there is coincidence between the attribute information of the advertisement contents data and the analysis result, the advertisement contents data having the attribute information as a whole are received from the distribution device used by the advertisement contents distributor, and when there is no coincidence therebetween, the advertisement contents data are not received.
